# EUROPEAN PATENT APPLICATION

(11) **EP 4 722 789 A2**
(43) Date of publication of application: **08.04.2026**
(21) Application number: 26159667.0
(22) Date of filing: 20.08.2020
(51) Int. Cl.: G02B 27/01

(54) **NEAR-EYE IMAGE PROJECTION SYSTEM AND WEARABLE DEVICE COMPRISING SAID NEAR-EYE IMAGE PROJECTION SYSTEM**

(62) Divisional of application: 20764464.2
(71) Applicant: CREAL SA, 1024 Ecublens VD (CH)
(72) Inventor: Sluka, Tomas, 1012 Lausanne (CH)
(74) Representative: P&TS SA (AG, Ltd.)

(57) **Abstract**

Near-eye image projection system comprising a pin-light source generating incident light beams; a SLM generating modulated light beams forming pin-light images at a first plane; illumination optics, in a third plane, delivering the incident light beams from the pin-light source to the SLM; and imaging optics delivering the modulated light beams along a projection axis, in a fourth plane, to an eye-box region in a second plane parallel to the first plane. The third and fourth planes being substantially perpendicular to the first plane. The illumination optics defines a first optical path from the first plane to the second plane and a second optical path from the third plane to the fourth plane. The imaging optics defines a third optical path from the second plane to the first plane and a fourth optical path from the first plane to the second plane. A wearable device comprising the near-eye image projection system is also described.

## Description

### Technical domain

The present invention concerns a near-eye image projection system having small form factor. The present invention further concerns a wearable device comprising said near-eye image projection system, such as augmented/mixed reality or smart glasses. More particularly the present invention concerns a near-eye light-field projection system. The near-eye light-field projection system can have foveation capability.

### Related art

Light-field image projection by means of sequential spatial light modulation of structured incident light by a spatial light modulator (SLM) typically requires that the source light from a light source is shaped by several optical elements that are separated by sufficient volume of a transparent medium in order to achieve the required characteristics of the structured incident light and, therefore, of the projected light-field image. Such arrangement results in a bulkier device that is not suitable for use in applications where small form-factor is required, such as in wearable devices, e.g. smart glasses. Shrinking the optics by using higher power optical elements, such as lenses with shorter focal length, freeform optics, etc. still requires substantial volume for light propagation, or is penalized by the lower quality of the illumination light structure and, consequently, of the projected image, and higher compensation requirements due to optical artifacts such as distortions, aberrations, diffractions, etc.

Document EP3542206A1 discloses a method of light-field projection by sequential spatial light-modulation of structure light. Document WO2020157562A1 discloses several methods of combination of light-field projection system with different types of combiners and document US20190285897A1 discloses an apparatus using image pupil expansion with a waveguide in combination with a reflective combiner.

### Summary

The present disclosure concerns a near-eye image projection system, comprising a pin-light source generating a plurality of incident light beams; a SLM configured to modulate said plurality of incident light beams and generate a plurality of modulated light beams such as to form pin-light images at a first plane; illumination optics configured to deliver the incident light beams from the pin-light source to the SLM; and imaging optics configured to deliver sequentially the modulated light beams from the SLM along a projection axis to an eye-box region in a second plane substantially parallel to the first plane. The illumination optics is in a third plane and the projection axis is in a fourth plane; the third and fourth planes are substantially perpendicular to the first plane. The illumination optics defines a first optical path from the first plane to the second plane, and a second optical path from the third plane to the fourth plane. The imaging optics defines a third optical path from the second plane to the first plane, and a fourth optical path from the first plane o the second plane.

The near-eye image projection system disclosed herein has a small form factor and is well adapted for wearable applications such as for augmented/mixed reality or smart glasses.

### Short description of the drawings

Exemplar embodiments of the invention are disclosed in the description and illustrated by the drawings in which:
Figs. 1a to 1f show a schematic representation of a near-eye image projection system comprising a SLM, illumination optics and imaging optics, according to several embodiments;
Figs. 2a to 2c show the illumination optics, according to several embodiments;
Fig. 3 illustrates a peripheral image injection optics of the imaging optics, according to an embodiment;
Fig. 4a represents an image composed of light-field and peripheral parts as seen from a foveal eye-box region;
Fig. 4b represents an actively foveated image composed of light-field and peripheral parts where the light-field part of the image is aligned with the region of interest such region where the gaze of a viewer is pointing from a foveal eye-box region;
Fig. 5 is a schematic representation of mixed reality glasses, according to an embodiment; and
Fig. 6 is a top view of the mixed reality glasses of Fig. 5, worn by a user.

### Examples of embodiments

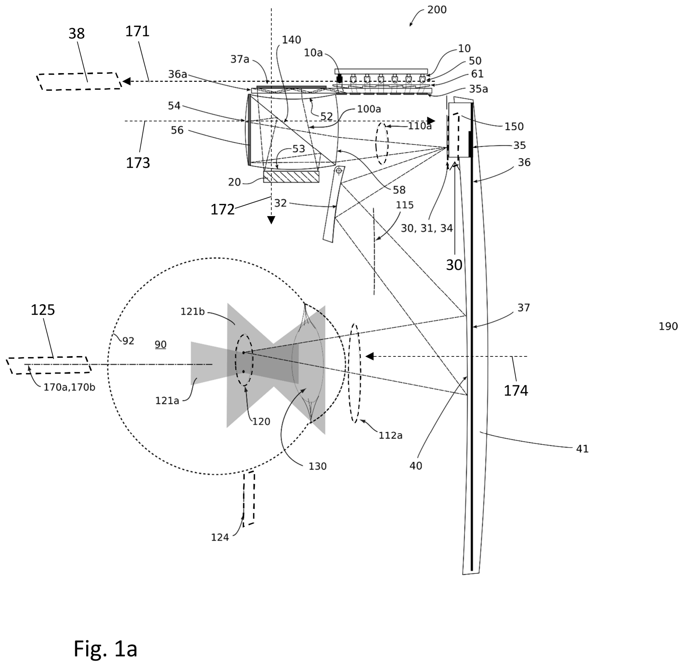

**Figs. 1a to 1f** show a schematic representation of a near-eye image projection system 200, according to an embodiment. The near-eye image projection system 200 comprises a pin-light source 10 generating a plurality of incident light beams 100a, 100b. A SLM 20 is configured to modulate the plurality of incident light beams 100a, 100b and generate a plurality of modulated light beams 110a, 110b and form pin-light images 31, 39 at a first plane 30. The near-eye image projection system further comprises illumination optics configured to deliver sequentially the incident light beams 100a, 100b from the pin-light source 10 to the SLM 20, along a projection axis 170a, 170b to an eye-box 121a, 121b in a second plane 124 substantially parallel to the first plane 30.

Referring to Fig. 1a, the illumination optics is in a third plane 38 and the projection axis 170a, 170b is in a fourth plane 125. The third and fourth planes 38, 125 are substantially perpendicular to the first plane 30. The illumination optics is configured to define a first optical path 171 shown parallel, although not necessarily, to the projection axis 170a, 170b in a first direction, from the first plane 30 to the second plane 124. The illumination optics can be further configured to define a second optical path 172 (shown perpendicular to the projection axis 170a, 170b although not necessarily) from the third plane 38 to the fourth plane 125.

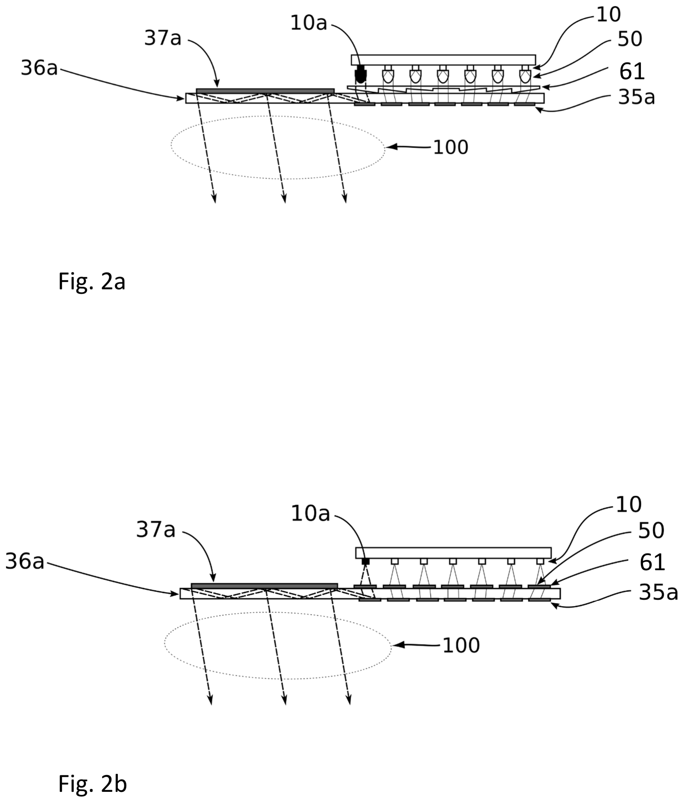

A possible configuration of the illumination optics is shown in Fig. 2a, according to an embodiment. The illumination optics comprises a pin-light source 10 comprising a plurality of individual pin-lights 10a, each pin-light 10a being adapted to generate at least an incident light beam 100a, 100b. In the particular example of Fig. 2a, the pin-light source 10 comprises an array of pin lights 10a in a plane substantially perpendicular to the first plane 30. Other arrangements of the pin-light source 10 are however possible.

In one aspect, the illumination optics comprises a collimating optical element 50 configured to collimate the incident light beams 100a, to a narrow beam. The collimating optical element 50 can comprise any one or a plurality of a lens, a mirror, a hologram or any other optical element performing the collimation.

In one aspect, the illumination optics further comprises an illumination deflecting element 61 configured to redirect the incident pin-lights 100a, 100b along the first optical path 171. The illumination deflecting element 61 can comprise any one or a plurality of a prism, a grating, a hologram or any other optical element performing the redirecting.

In one aspect, the illumination optics comprises an illumination pupil expansion device 36a configured to expand the incident light beams 100a, 100b from an entrance of the illumination pupil expansion device 36a to an exit pupil. The illumination pupil expansion device 36a enables an increased field of view (FOV) of a projected image.

In one aspect, the illumination pupil expansion device comprises a light-guide or waveguide 36a including an illumination in-coupling element 35a configured to input the incident pin-lights 100a, 100b. The illumination waveguide 36a can further include an illumination out-coupling element 37a configured to output the incident pin-lights 100a, 100b along the second optical path 172.

The collimated incident light beams 100a, 100b are injected into the illumination waveguide 36a by means of interaction with the illumination in-coupling element 35a. The latter can comprise diffraction gratings, holograms, inclined mirrors or prisms, stack of semi-reflective interfaces, or any other suitable optical element. The incident light beams 100a, 100b propagates due to internal reflection while they expand in the plane of the illumination waveguide 36a by means of interaction with 1D or 2D fold gratings or by any other optical element expanding the incident light beams 100a, 100b. The illumination out-coupling element 37a can comprise a diffraction grating, a hologram, an inclined mirror or prism array, stack of semi-reflective interfaces, or any other optical element configured to output the incident pin-lights 100a, 100b along the second optical path 172. The illumination out-coupling element 37a can be configured such that the incident light beams 100a, 100b exit the illumination waveguide 36a multiplicated with homogeneously distributed intensity and collimated in the orientation given by the tilt angle of the injected incident light beams 100a, 100b, the orientation being the second optical path 172.

The expanded collimated beams sequentially illuminate the reflective or transmissive SLM 20. In the case of transmissive SLM, the incident light components become modulated and propagate to projection optics.

Again referring to Fig. 1a, the imaging optics is further configured to define a third optical path 173 (shown parallel to the projection axis 170a, 170b in the first direction although not necessarily) from the second plane 124 to the first plane 30. The imaging optics is further configured to define a fourth optical path 174 (shown parallel to the projection axis 170a, 170b although not necessarily) from the first plane 30 to the second plane 124.

In an embodiment, the imaging optics comprises an illumination and projection optical element 70. The latter can comprise a prism 70 including a first and second beam shaping outer surfaces 52, 53. In the case of a reflective SLM 20, such as shown in Fig. 1a, the incident light beams 100a, 100b exiting the illumination waveguide 36a by the illumination out-coupling element 37a along the second optical path 172, pass through the first and second beam shaping outer surfaces 52, 53 of the prism 70 before it reaches the SLM 20. The first and second beam shaping outer surfaces 52, 53 can be configured to concentrate the collimated incident light beams 100a, 100b on the SLM 20.

In one aspect, the prism 70 can include a beam splitter 140 configured to be traversed by the incident light beams 100a, 100b along the second optical path 172 before the incident pin-lights 100a, 100b reach the SLM 20.

The (reflective) SLM 20 modulates the incident light beams 100a or 100b and reflects the modulated light beams 110a, 110b (image components) along the second optical path 172 back to the prism 70 through the second beam shaping surface 53. The SLM 20 is further configured to reflect the modulated light beams 110a, 110b with in-plane polarization (s-polarization) or higher-than-total internal reflection angle (in case the SLM 20 comprises a digital micromirror device), which is obtained during the modulation at the SLM 20.

The beam splitter 140 can be further configured to reflect the modulated light beams 110a, 110b generated by the SLM 20 along the third optical path 173. The prism 70 further includes a third and fourth beam shaping outer surfaces 54, 58. The modulated light beams 110a, 110b reflected by the beam splitter 140 is reflected by the third beam shaping outer surface 54 along the fourth optical path 174.

The third beam shaping outer surface 54 can be configured such that the polarization of the modulated light beams 110a, 110b is reversed relative to the in-plane polarization provided by the SLM 20.

In one aspect, the third beam shaping outer surface 54 can comprise a quarter-wave plate 56 configured such that the modulated light beams 110a, 110b along the third optical path 173 becomes p-polarized.

The modulated light beams 110a, 110b reflected by the third beam shaping outer surface 54 passes through the fourth beam shaping outer surfaces 58. The fourth beam shaping outer surface 58 can be configured to collimate the SLM pixel beams that compose the modulated light beams 110a, 110b.

In an embodiment, the imaging optics comprises an optical combiner 40 configured to receive the modulated light beams 110a, 110b and project image light beams 112a, 112b along the projection axis 170a, 170b to the eye-box 121a, 121b. The optical combiner 40 is further configured to transmit natural light from the real world 190 towards the eye-box 121a, 121b.

The near-eye image projection system 200 is destined to be worn by a viewer for virtual and mixed reality applications. The image projection system can be configured such that, when it is worn by the viewer, the eye-box region 121a, 121b and an exit pupil (or view point) 120 is within the viewer's eye 90. The image light beams 112a, 112b are projected towards a pupil 130 of the viewer's eye 90, such that the image light beams 112a, 112b are projected on the retina 92.

The modulated light beams can comprise foveal modulated light beams 110a forming foveal pin-light images 31 at the first plane 30 and peripheral modulated light beams 110b forming peripheral pin-light images 39 at the first pin-light plane 30.

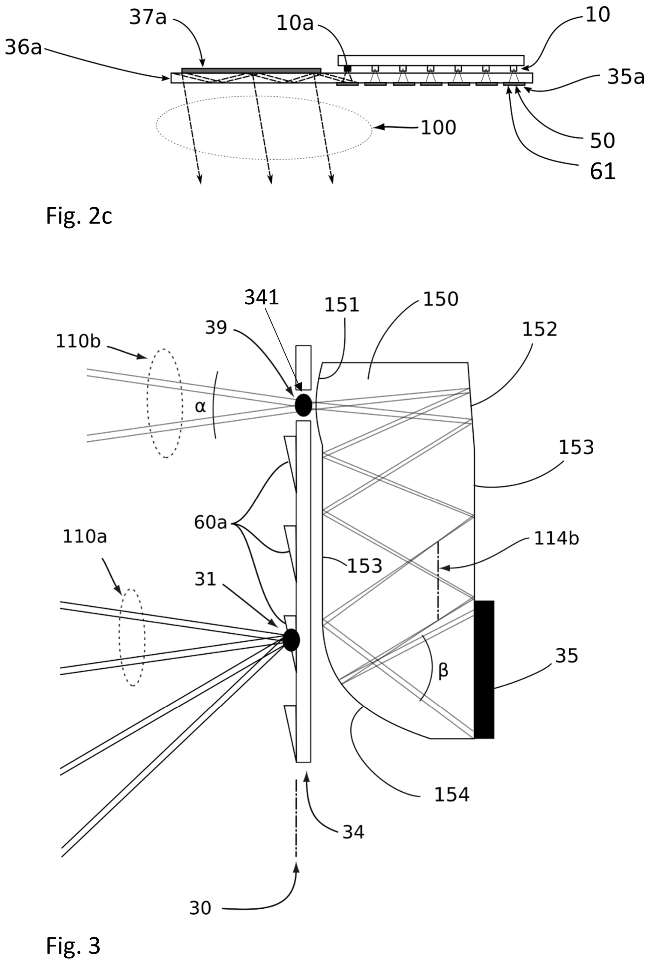

In one aspect, the imaging optics further comprises a Fourier filter 34 in the first plane 30. The Fourier filter 34 can comprise imaging deflecting elements 60a (see Fig. 3) reflecting the foveal modulated light beams 110a to a foveal combiner 41 comprised in the optical combiner 40, such that the foveal combiner 41 reflects the modulated foveal light beams 110a and projects foveal image light beams 112a towards a foveal eye-box 121a. The foveal combiner 41 can comprise a transparent or at least partially transparent reflecting surface. The reflecting surface can be concave and/or ellipsoid shaped or have any shape adapted to project foveal image light beams 112a towards a foveal eye-box 121a.

In particular, **Fig. 1a** shows the pin-light source 10 generating a single incident foveal light beam 100a and the projection of a single foveal modulated light beam 110a and foveal image light beam 112a towards a foveal eye-box 121a. The single incident foveal light beam 100a is generated by a single pin-light (active pin-light) 10a of the pin-light source 10. The foveal image light beams 112a forms an image at a viewpoint in 120 in the foveal eye-box 121a.

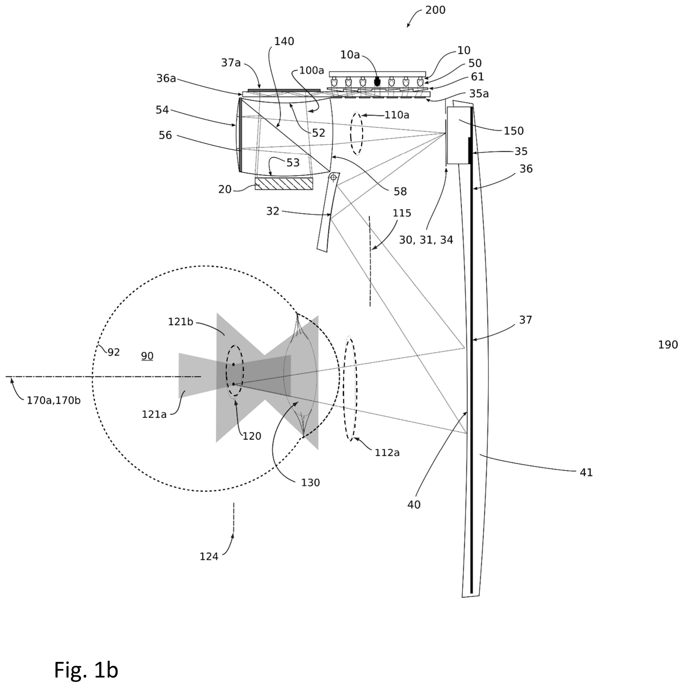

**Fig. 1b** shows the near-eye image projection system 200, wherein a single incident foveal light beam 100a is generated by another single pin-light 10a of the pin-light source 10. The foveal image light beam 112a forms an image at another viewpoint 120 in the foveal eye-box 121a.

A plurality of pin-lights 10a of the pin-light source 10 can generate a plurality of incident foveal light beams 100a and the illumination optics and imaging optics project a plurality of foveal modulated light beams 110a and foveal image light beams 112a towards a foveal eye-box 121a.

The imaging optics can further comprise an imaging mirror 32 configured to reflect the foveal modulated light beams 110a reflected by the imaging deflecting elements 60a to the foveal combiner 41. The imaging mirror 32 can be placed in the vicinity of the SLM 20 such the foveal modulated light beams 110a are reflected by the imaging deflecting elements 60a towards the SLM 20 and reflected back by the imaging mirror 32 towards the foveal combiner 41. The imaging deflecting elements 60a can comprise inclined mirrors or prisms. The imaging mirror 32 produces foveal modulator images 114a in a modulator image plane 115 between the imaging mirror 32 and the foveal combiner 41. Since each of the imaging deflecting elements 60a can be oriented at different angles (for example, the mirrors or prisms can be inclined at different angles), the foveal modulator images 114a can create an array wherein at least some of the foveal modulator images 114a are spatially displaced in the modulator image plane 115 relative to other foveal modulator images 114a. In this case the foveal combiner 41 would cause that the image array is seen by a viewer from the eye box 121a.

In an embodiment, the imaging mirror 32 can be movable such as to deflect the foveal modulated light beams 110a reflected by the imaging mirror 32 from the projection axis 170a, 170b.

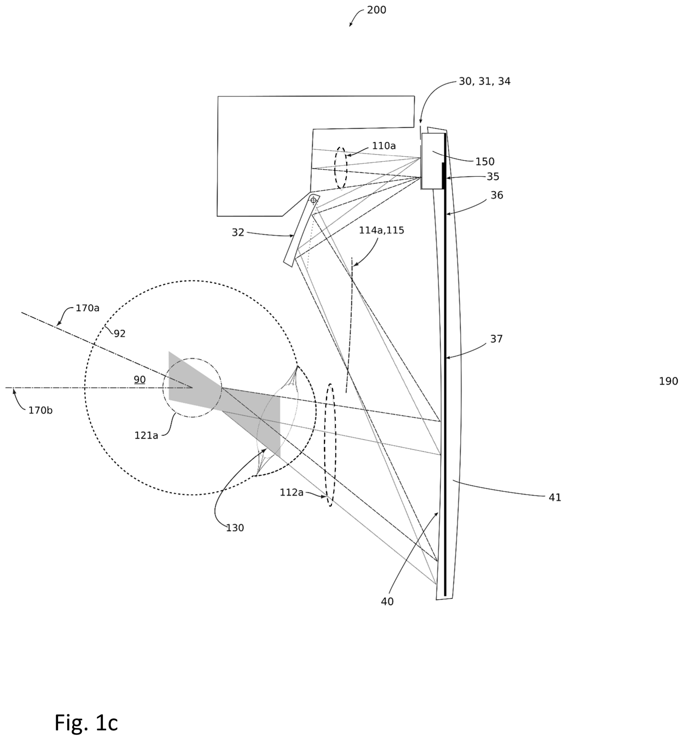

**Fig. 1c** illustrates the near-eye image projection system 200, wherein two foveal modulated light beams 110a, from two incident foveal light beams 100a generated by the pin-light source 10, are projected along a projection axis 170a which is inclined with respect to a central (neutral) projection axis 170b. The inclination of the projection axis 170a relative to the central projection axis 170b is a function of the movement (rotation) of the imaging mirror 32.

In one aspect, the near-eye image projection system 200 can comprise an eye-tracking and steering device (not shown) providing eye-tracking information. The imaging mirror 32 can then be moved (rotated) in accordance with eye-tracking information.

In one aspect, the Fourier filter 34 is further configured to let the peripheral modulated light beams 110b pass through the Fourier filter 34 and reach an image injection optics 150 configured to expand the peripheral modulated light beams 110b from a first angle α to a second angle β larger than the first angle α.

The Fourier filter 34 can thus be configured to split the optical path of the foveal modulated light beams 110a and the peripheral modulated light beams 110b.

**Fig. 3** illustrates the peripheral image injection optics 150, according to an embodiment. In the configuration of Fig. 3, the image injection optics 150 includes a beam shaping transmissive surface 151 where the peripheral modulated light beams 110b are inputted. In Fig. 3, one peripheral modulated light beam 110b is shown. The following discussion considers one peripheral modulated light beam 110b but also applies to a plurality of peripheral modulated light beams 110b. The image injection optics 150 further includes a reflective surfaces 152, 153 (mirrors 152 and 153) and a beam shaping reflective surface 154.

The inputted peripheral modulated light beam 110b enters the peripheral image injection optics 150 with the first angle α through an opening 341 in the Fourier filter 34. The opening 341 coincides with the peripheral pin-light image 39 of the peripheral modulated light beam 110b.

The peripheral modulated light beam 110b is inputted in the peripheral image injection optics 150 with a beam angle α through the opening 341. The peripheral modulated light beam 110b propagates within the peripheral image injection optics 150 due to internal reflection on the reflective surfaces 152, 153 and 154 while it expands to the second angle β, towards an imaging in-coupling element 35. The peripheral image injection optics 150 creates a peripheral modulator image 114b of the SLM 20. In this configuration, a peripheral modulated light beam 110b from each pixel of the image 114b is collimated by the beam shaping reflective surface 154 and is injected by the imaging in-coupling element 35.

In the embodiments shown in Figs. 1a to 1f, the optical combiner 40 comprises the foveal combiner 41 and a peripheral combiner including an imaging exit pupil expansion device 36 configured to receive the peripheral modulated light beams 110b and project the peripheral image light beams 112b along the projection axis 170 within the peripheral eye-box region 121b. The collimated peripheral modulated light beams 110b (the peripheral modulated light beams 110b include beams from each SLM pixel, these pixel beams are collimated) with expanded second β are injected into the imaging exit pupil expansion device 36 through the imaging in-coupling element 35. The imaging exit pupil expansion device can comprise an imaging waveguide 36.

The imaging waveguide 36 can comprise an imaging out-coupling element 37 configured to allow the peripheral image light beams 112b to exit the imaging waveguide 36 and be projected along the projection axis 170b within the peripheral eye-box region 121b. The peripheral eye-box region 121b is typically larger than the foveal eye-box region 121a due to pupil replication that is performed by the imaging waveguide 36.

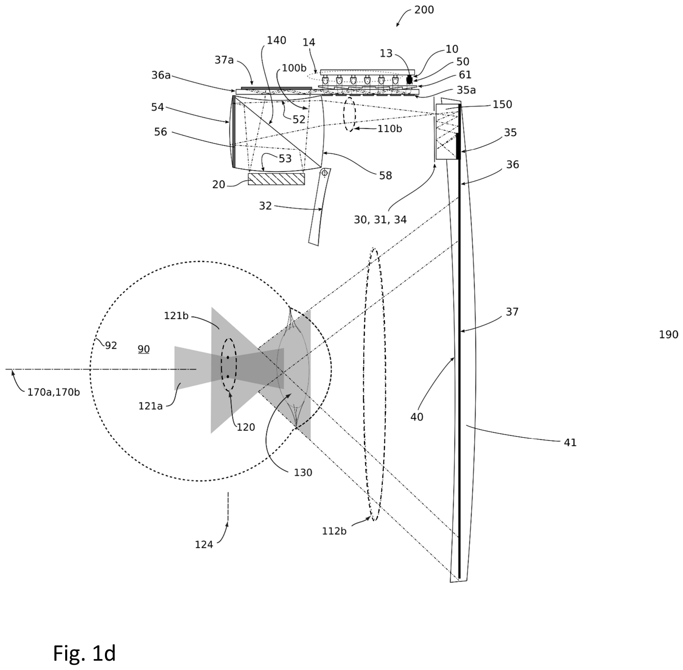

**Fig. 1d** illustrates the near-eye image projection system 200, wherein a subset of peripheral modulated light beams 110b (namely one peripheral modulated light beam 110b), is transmitted through the Fourier filter 34, injected in the imaging waveguide 36 and peripheral image light beams 112b are projected along the projection axis 170b within the peripheral eye-box region 121b.

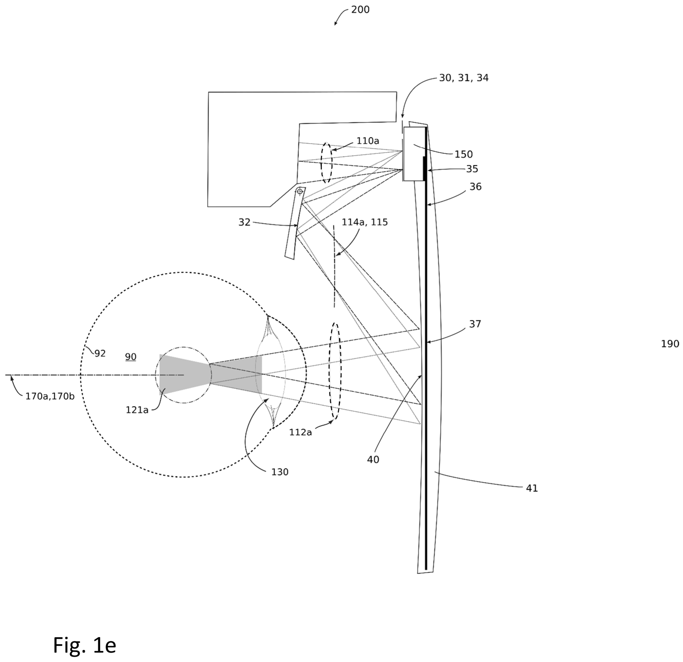

**Fig. 1e** illustrates the near-eye image projection system 200, wherein a subset of (two) foveal modulated light beams 110a is reflected on the imaging mirror 32 and the foveal combiner 41, and the foveal image light beams 112a are projected along the projection axis 170a within the foveal eye-box region 121a. The imaging deflecting elements 60a can reflect the incident light beams 110a in different angles such that wherein at least some of the foveal modulator images elements 114a are focused at different locations in the plane 115 relative to other foveal modulator images 114a.

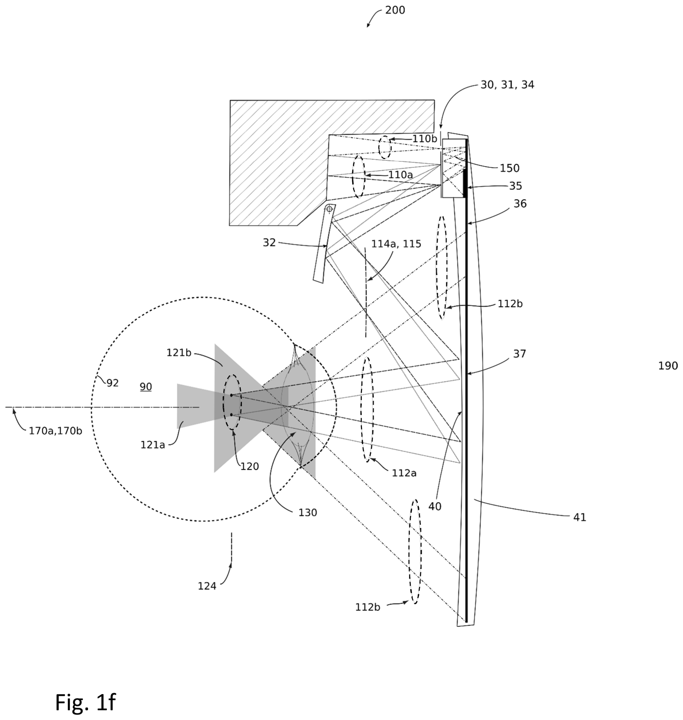

**Fig. 1f** illustrates the near-eye image projection system 200 of Fig. 1e, further showing a subset (namely one) of peripheral modulated light beams 110b are injected in the peripheral combiner (imaging exit pupil expansion device 36) and the corresponding peripheral image light beams 112b are projected along the projection axis 170b within the peripheral eye-box region 121b.

In Figs 1c, 1e and 1f, the pin-light source 10, SLM 20, prism 70 and the illumination pupil expansion device 36a are represented schematically by a box 200.

The imaging out-coupling element 37 can comprise a volume hologram, diffraction grating mirror arrays or stack of prism (semitransparent interfaces). The out-coupling element 37 and the waveguide 36 are used as the peripheral combiner and, thus, need to be partly transparent in augmented reality applications. They can be non-transparent for virtual reality applications and video pass-through augmented reality applications. The foveal combiner 41 can comprise a wide range of semitransparent optical devices, such as volume holograms, Fresnel types of reflectors, or ellipsoid surface with semi-reflective inner surface.

The near-eye image projection system 200 allows for projecting the foveal modulated light beams 110a and the peripheral modulated light beams 110b, via the optical combiner 40, along the projection axis 170a, 170b to the eye-boxes 121a and 121b as foveal image light beams 112a and peripheral image light beams 112b, respectively.

Other configuration of the illumination optics can be contemplated. For example, in **Fig. 2b****,** the illumination collimating element 50 and deflecting element 61 comprises an hologram. In **Fig. 2c****,** the functions of the collimating element 50, imaging deflecting element 60a and of the illumination in-coupling element 35a are performed by a single holographic of diffractive element 35a.

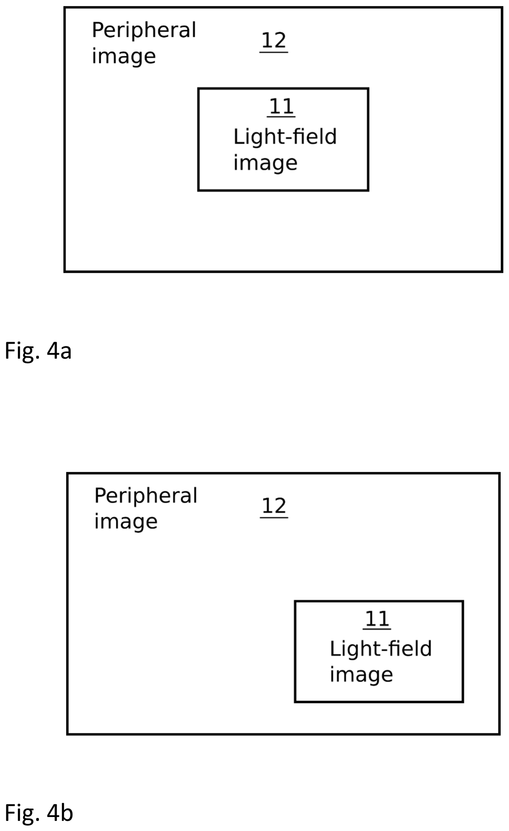

**Fig. 4a** represents a foveated region of the field of view as seen from the foveal eye-box region 121a. The image comprises a narrow field of view light-field part 11 and a wider field of view peripheral image 12.

**Fig. 4b** represents an actively foveated image as seen from the peripheral eye-box region 121a. The actively foveated image can be obtained in the case the near-eye image projection system 200 comprises an eye-tracking and steering device and a movable imaging mirror 32. The narrow field of view light-field part 11 can be moved from a central position based on information about the viewer's eye gaze or according to the displayed content, with respect to the wide field of view image 12.

The present disclosure further pertains to a wearable device comprising the image projection system 200.

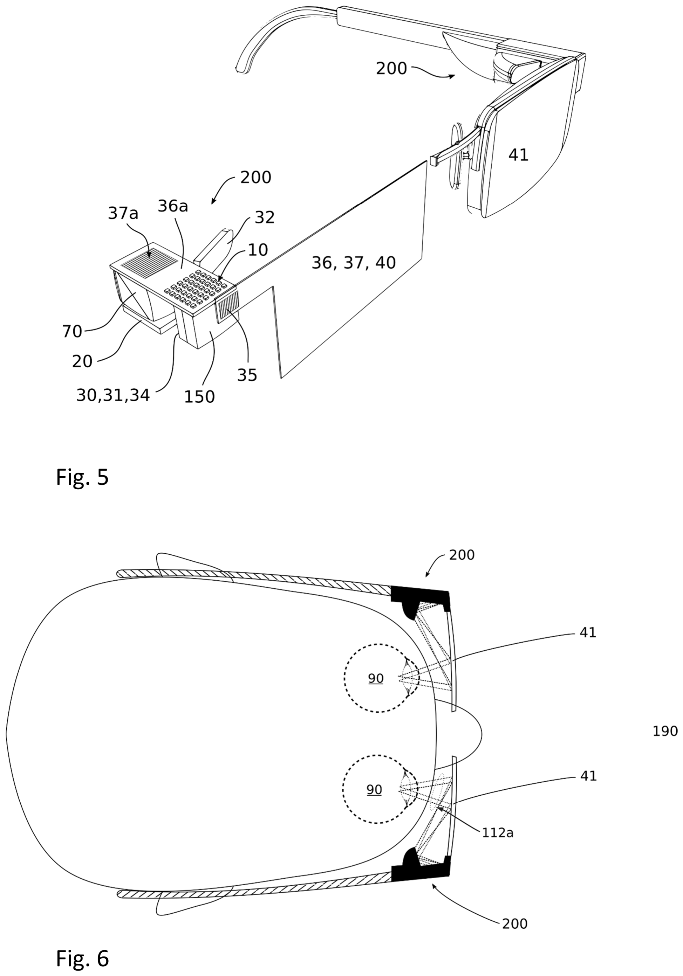

**Fig. 5** is a schematic representation of mixed reality glasses comprising the image projection system 200 on each temple, according to an embodiment. In the right side of the glasses, the pin-light source 10, SLM 20, prism 70, imaging mirror 32, Fourier filter 34, illumination pupil expansion device 36a and illumination out-coupling element are represented. The right temple is not shown. The foveal combiner comprises a lens 41 (glass lens). The imaging exit pupil expansion device 36 and the imaging out-coupling element 37 forming the peripheral combiner are embedded in the lens 41. On the left side of the glasses, the image projection system 200 is integrated into the temple.

**Fig. 6** is a top view of the mixed reality glasses of Fig. 5, worn by a user. The image projection system 200 can be included only on one side of the mixed reality glasses with the optical combiner 40 being comprised in at least one of the lenses 41 of the glasses (as described above). The image projection system 200 can be included in the hinges or another portion of the temples.

### Reference Numbers and Symbols

- 10: pin-light source
- 10a: active pin-light
- 11: foveated region of the field of view
- 12: peripheral region of the field of view
- 13: peripheral pin-light subarray
- 20: optical light modulator (SLM)
- 30: first plane
- 31: foveal pin-light image
- 32: imaging mirror
- 34: Fourier filter
- 341: opening
- 35: imaging in-coupling element
- 35a: illumination in-coupling element
- 36: peripheral exit pupil expansion device, peripheral waveguide
- 36a: illumination pupil expansion device, illumination waveguide
- 37: peripheral out-coupling element
- 37a: illumination out-coupling element
- 38: third plane
- 39: peripheral pin-light image
- 40: optical combiner
- 41: foveal combiner, lens
- 50: collimating optical element
- 52: first beam shaping outer surface
- 53: second beam shaping outer surface
- 54: third beam shaping outer surface
- 56: quarter-wave plate
- 58: fourth beam shaping outer surface
- 61: illumination deflecting element
- 60a: imaging deflecting elements
- 70: illumination and projection optical element, prism
- 90: eye
- 92: retina
- 100a: foveal incident light beam
- 100b: peripheral incident light beam
- 110a: foveal modulated light beam
- 110b: peripheral modulated light beam
- 112a: foveal image light beams
- 112b: peripheral image light beams
- 114a: foveal modulator image
- 114b: peripheral modulator image
- 115: modulator image plane
- 120: second pin-light images, viewpoints
- 121a: foveal eye-box region
- 121b: peripheral eye-box region
- 124: second plane
- 125: fourth plane
- 130: pupil
- 140: beam splitter
- 150: image injection optics
- 151: beam shaping transmissive surface
- 152: reflective surface
- 153: reflective surface
- 154: beam shaping reflective surface
- 170a: projection axis
- 170b: central viewing axis
- 171: first optical path
- 172: second optical path
- 173: third optical path
- 174: fourth optical path
- 190: real world
- 200: image projection module

## Claims

1. A near-eye image projection system (200), comprising:
a pin-light source (10) generating a plurality of incident light beams (100a, 100b);
a spatial light modulator (SLM) (20) configured to modulate said plurality of incident light beams (100a, 100b) and generate a plurality of modulated light beams (110a, 110b) such as to form pin-light images (31, 39) at a first plane (30);
illumination optics configured to deliver the incident light beams (100a, 100b) from the pin-light source (10) to the SLM (20); and
imaging optics configured to deliver sequentially the modulated light beams (110a, 110b) from the SLM (20) along a projection axis (170a, 170b) to an eye-box region (121a, 121b) in a second plane (124) substantially parallel to the first plane (30);
**characterized in that**
the illumination optics is in a third plane (38) and the projection axis (170a, 170b) is in a fourth plane (125), the third and fourth planes (38, 125) being substantially perpendicular to the first plane (30);
the illumination optics defines a first optical path (171) from the first plane (30) to the second plane (124) and a second optical path (172) from the third plane (38) to the fourth plane (125);
the imaging optics defines a third optical path (173) from the second plane (124) to the first plane (30) and a fourth optical path (174) from the first plane (30) to the second plane (124); and
wherein the imaging optics comprises a prism (70) including a first and second beam shaping outer surfaces (52, 53) arranged to be traversed by the incident light beams (100a, 100b) along the second optical path (172).

2. The projection system according to claim 1,
wherein the prism (70) further includes a third and fourth beam shaping outer surfaces (54, 58) traversed by said plurality of incident light beams (100a, 100b) along the third optical path (173).

3. The projection system according to claim 2,
wherein the prism (70) further includes a beam splitter (140) configured to be traversed by the incident light beams (100a, 100b) along the second optical path (172) and reflecting the modulated light beams (110a, 110b) on the third beam shaping outer surface (54).

4. The projection system according to claim 3,
wherein the third beam shaping outer surface (54) is configured to reflect the modulated light beams (110a, 110b) along the third optical path (173).

5. The projection system according to claim 3 or 4,
wherein the SLM (20) is configured such that the modulated light beams (110a, 110b) are in-plane polarized.

6. The projection system according to claim 5,
wherein the third beam shaping outer surface (54) is configured such that the polarization of the modulated light beams (110a, 110b) is reversed relative to the polarization provided by the SLM (20); and
wherein the third beam shaping outer surface (54) comprises a quarter-wave plate (56) configured such that the modulated light beams (110a, 110b) along the third optical path (173) is p-polarized.

7. The projection system according to any one of claims 2 to 6,
wherein the fourth beam shaping outer surfaces (58) is configured to collimate the modulated light beams (110a, 110b).
